# FASCICULE DE BREVET EUROPEEN

(11) **EP 0 653 443 B1**
(45) Date de publication et mention de la délivrance du brevet: **28.01.1998**
(21) Numéro de dépôt: 94203129.5
(22) Date de dépôt: 27.10.1994
(51) Int. Cl.: C08F 10/00, C08F 4/642

(54) **Système catalytique utilisable pour la polymérisation des alpha-oléfines et procédé pour cette polymérisation**
Katalysatorsystem für die Polymerisation von Alpha-Olefinen und Verfahren zu dieser Polymerisation
Catalyst system for the polymerization of alpha-olefins and process for this polymerization

(30) Priorité: 04.11.1993 BE 9301213
(43) Date de publication de la demande: 17.05.1995
(73) Titulaire: SOLVAY POLYOLEFINS EUROPE - BELGIUM (Société Anonyme), 1050 Bruxelles (BE)
(72) Inventeur: Collette, Hervé, B-5810 Namur (BE); Pamart, Sabine, B-7000 Mons (BE)
(74) Mandataire: Troch, Geneviève

(56) Documents cités:
- EP-A- 0 021 753
- EP-A- 0 569 078
- DE-A- 1 296 796
- FR-A- 2 259 840
- FR-A- 2 371 464
- DATABASE WPI Derwent Publications Ltd., London, GB; AN 88-194707 'Polymerization of olefins' & JP-A-63 132 905 (SHOWA DENKO KABUSHIKI KAISHA) 4 Juin 1984

## Description

La présente invention concerne un système catalytique utilisable pour la polymérisation stéréospécifique des alpha-oléfines, un procédé pour son obtention et un procédé pour la polymérisation des alphaoléfines en présence de ce système catalytique.

Il est connu de polymériser les alpha-oléfines au moyen d'un système catalytique comprenant un solide catalytique à base de chlorure de titane et un cocatalyseur choisi parmi les composés organiques des métaux des groupes Ia, IIa et IIIa du Tableau Périodique (version publiée dans Handbook of Chemistry and Physics, 50e édition).

Parmi les systèmes catalytiques sus-mentionnés, ceux qui contiennent un solide catalytique à base de trichlorure de titane complexé par un composé électrodonneur, de forme cristalline δ, et, à titre de cocatalyseur, un halogénure de dialkylaluminium, tout particulièrement le chlorure de diéthylaluminium, présentent une activité et une stéréospécificité maximales. De tels systèmes catalytiques peuvent également contenir des terconstituants électrodonneurs conventionnellement connus pour en augmenter la stéréospécificité.

L'utilisation de ces cocatalyseurs halogénés conduit cependant à des polymères contenant de relativement grandes quantités de résidus halogénés qui, s'ils ne sont pas éliminés, leur confèrent un caractère corrosif et en altèrent la stabilité.

L'utilisation de cocatalyseurs non halogénés tels que des trialkylaluminiums permet de résoudre ce problème mais conduit le plus souvent à l'obtention de résines contenant une grande proportion de polymère amorphe.

On a tenté de remédier à cet inconvénient en ajoutant au dit système catalytique un composé électrodonneur, de préférence un composé aminé ou organophosphoré [Brevet GB-A-1486194]. Ce document préconise plus particulièrement l'addition d'amines ne contenant pas de lien azote/hydrogène telles que par exemple la tétraméthyléthylènediamine, la pyridine, la quinoléine et l'isoquinoléine. Dans ce cas, on n'observe pas de formation de liaison entre l'aluminium du composé organoaluminique et l'azote de l'amine et l'amélioration de stéréospécificité qui résulte de la présence de l'amine est insuffisante et se fait au détriment de la productivité catalytique.

On a maintenant trouvé des systèmes catalytiques pauvres en halogène qui ne présentent pas les inconvénients des systèmes décrits antérieurement.

La présente invention concerne à cet effet un système catalytique utilisable pour la polymérisation des alpha-oléfines comprenant :
(a) un solide catalytique à base de trichlorure de titane (TiCl₃),
(b) un cocatalyseur non halogéné comprenant au moins un composé organoaluminique non halogéné,
dans lequel le cocatalyseur non halogéné contient en outre au moins un aminoalane ne contenant pas d'hydrogène actif.

Les composés organoaluminiques non halogénés présents dans le cocatalyseur (b) selon la présente invention sont généralement choisis parmi les trialkylaluminiums, les alkylalkoxyaluminiums, les hydrures d'alkylaluminium et les composés de type aluminoxane se présentant sous forme cyclique ou linéaire.

Les composés préférés sont les trialkylaluminiums possédant des radicaux alkyle identiques ou différents contenant de 1 à 12 atomes de carbone.

On obtient de particulièrement bons résultats en utilisant des trialkylaluminiums dont les radicaux alkyle contiennent de 1 à 3 atomes de carbone tels que le triméthylaluminium, le triéthylaluminium, le tripropylaluminium, le triisopropylaluminium.

Les cocatalyseurs (b) selon l'invention contiennent en outre au moins un aminoalane ne contenant pas d'hydrogène actif.

Selon la présente invention, les aminoalanes ne contenant pas d'hydrogène actif sont choisis parmi les composés organoaluminiques contenant au moins une liaison aluminium/azote qui ne dégagent pas d'éthane lorsqu'ils sont mis en présence de triéthylaluminium à une température comprise entre 80 et 120 °C.

Ces aminoalanes sont en outre le plus souvent choisis parmi les composés représentés par la formule générale :

(AlR₂)₃₋ₓ N R'ₓ (I)

dans laquelle
- R représente un radical hydrocarboné pouvant contenir un ou plusieurs hétéroatomes;
- R' représente un atome d'hydrogène ou un radical hydrocarboné pouvant contenir un ou plusieurs hétéroatomes;
- x est un nombre quelconque tel que 0 ≤ x < 3;
les radicaux R' et R pouvant chacun indépendamment les uns des autres représenter des radicaux identiques ou différents.

Les aminoalanes utilisables selon la présente invention ne contiennent avantageusement pas d'hétéroatomes halogénés.

Dans la formule (I), R est choisi de préférence parmi les radicaux alkyle linéaires ou branchés contenant de 2 à 8 atomes de carbone et parmi les radicaux contenant de 1 à 30 atomes de carbone et un ou plusieurs hétéroatomes tels que par exemple des radicaux aminés pouvant eux-mêmes contenir un ou plusieurs groupements aminoalanes.

R' est de préférence choisi parmi les radicaux alkyle linéaires ou branchés, cycloalkyle, alkényle, aryle, alkylaryle et arylalkyle pouvant eux mêmes porter des substituants contenant un ou plusieurs hétéroatomes tels que des groupements amino ou aminoalane. Les radicaux R' préférés sont les radicaux alkyle et cycloalkyle plus particulièrement ceux qui contiennent de 1 à 18 atomes de carbone. Les radicaux R' de ce type portant un ou plusieurs groupements amino ou aminoalane conviennent également bien. Parmi ces derniers composés, on préfère les composés dont les fonctions amine ne portent pas de liaison azote/hydrogène.

Dans la formule (I), x est de préférence un nombre au moins égal à 1. De préférence x est un nombre qui ne dépasse pas 2.

L'aminoalane peut avantageusement être obtenu par réaction entre un composé organoaluminique, de préférence tel que ceux définis ci-avant, et un composé aminé comprenant au moins un lien azote/hydrogène.

Le composé aminé est généralement choisi parmi les monoamines primaires et secondaires ou parmi les amines multifonctionnelles contenant au moins une liaison azote/hydrogène.

Parmi ces composés, on peut citer :
- à titre d'exemples de monoamines primaires, les monoalkylamines linéaires ou branchées, les monocycloalkylamines, les monoalkénylamines l'éthylamine, et les monoarylamines telles que la méthylamine, les propylamines, les butylamines, la cyclohexylamine et l'aniline;
- à titre d'exemples de monoamines secondaires, les dialkylamines, les dicycloalkylamines, les arylalkylamines, les cycloalkylamines, les alkylalkénylamines diéthylamine, et les diarylamines telles que la diméthylamine, la les dipropyl- et dibutylamines et la diphénylamine;
- à titre d'exemples d'amines multifonctionnelles contenant au moins une liaison azote/hydrogène, on peut citer les alkyldiamines primaires telles que l'éthylènediamine, le 1,3-diaminopropane, le 1,2-diaminopropane, le 1,4diaminobutane et le 1,12-diaminododécane, les aryldiamines primaires telles que les phénylènediamines et les diamines secondaires telles que les N,N'diméthyl et N,N'-diéthyléthylènediamines.

Parmi ces composés aminés, les alkylamines et cycloalkylamines conviennent bien et parmi elles les monoamines primaires et secondaires ainsi que les diamines primaires. Des composés de ce type contenant de 1 à 12 atomes de carbone donnent de bons résultats.

A titre d'exemples de composés aminés, tout particulièrement préférés, on peut citer l'éthylènediamine, le 1,3-diaminopropane, le 1,2-diaminopropane, le 1,4-diaminobutane, le 1,12-diaminododécane, les mono- et diméthylamines, les mono- et diéthylamines, les mono- et dipropylamines et les mono- et dibutylamines.

Les cocatalyseurs non halogénés selon l'invention contiennent généralement des quantités de composé organoaluminique non halogéné et d'aminoalane telles que leur rapport molaire est de 0,05 à 10. De préférence, ce rapport molaire est d'au moins 0,1 et plus particulièrement d'au moins 0,5. On obtient de bons résultats lorsque ce rapport molaire ne dépasse pas 7 et de préférence ne dépasse pas 4.

Le mode d'obtention et de mise en oeuvre des cocatalyseurs selon la présente invention n'est pas critique. Le composé organoaluminique non halogéné et l'aminoalane peuvent être par exemple introduits chacun indépendamment l'un de l'autre dans l'autoclave de polymérisation. On peut également mettre en contact le composé organoaluminique non halogéné avec l'aminoalane dans des conditions telles que les rapports molaires décrits ci-avant soient satisfaits avant de les introduire dans l'autoclave de polymérisation.

Une manière particulièrement avantageuse d'obtenir les cocatalyseurs selon la présente invention consiste à faire réagir un composé aminé comprenant au moins un lien azote/hydrogène tel que décrit ci-avant avec un excès de composé organoaluminique non halogéné dans des conditions telles que le mélange obtenu contienne du composé organoaluminique non halogéné libre et ne donne pas lieu à un dégagement d'alcane lorsqu'il est soumis à un traitement thermique à une température comprise entre 80 et 120 °C. Le composé organoaluminique non halogéné utilisé à cet effet est de préférence un trialkylaluminium tel que décrit ci-avant.

Le composé organoaluminique non halogéné et le composé aminé sont mis en contact dans des conditions propres à obtenir les cocatalyseurs décrits ci-avant.

Lorsqu'on utilise un trialkylaluminium à titre de composé organoaluminique non halogéné, le rapport molaire entre l'aluminium du trialkylaluminium et l'azote du composé aminé est généralement supérieur à 1. Un tel rapport est le plus souvent d'au moins 1,05, de préférence d'au moins 1,1 et plus particulièrement d'au moins 1,5. Il est en outre le plus souvent inférieur ou égal à 11. On obtient de bons résultats lorsque ce rapport n'est pas supérieur à 8 et de préférence lorsqu'il n'est pas supérieur à 5. Les conditions opératoires précises dépendent notamment de la nature respective des réactifs et en particulier de celle du composé aminé.

C'est ainsi que, lorsque le composé aminé, tel que par exemple les monoamines secondaires, ne contient qu'un lien azote/hydrogène, la simple mise en contact de ce composé avec le trialkylaluminium à température ambiante, pendant une durée suffisante pour qu'ils puissent réagir entre eux, suffit à obtenir un cocatalyseur selon la présente invention. La réaction entre ces deux composés s'accompagne le plus souvent d'un dégagement gazeux permettant d'en apprécier le degré d'avancement. Dans ce cas particulier, le temps de contact entre le trialkylaluminium et le composé aminé est généralement de 1 minute à 2 heures, de préférence de 5 minutes à 1 heure. Par contre, lorsque le composé aminé mis en oeuvre contient plus d'un lien azote/hydrogène, tel que par exemple les monoamines primaires ou les diamines primaires ou secondaires, il est le plus souvent nécessaire de soumettre le mélange, à un moment quelconque, de préférence après avoir mis les composés en contact, à un traitement thermique. Ce traitement thermique est généralement effectué à une température de 50 °C à 160 °C environ. De préférence la température à laquelle est effectué le traitement thermique est d'au moins 65 °C et plus particulièrement d'au moins 80 °C. Cette température est en outre le plus souvent de 150 °C au plus. On obtient de bons résultats lorsque cette température n'est pas supérieure à 120 °C. Ce traitement thermique s'accompagnant le plus souvent d'un dégagement gazeux, il est généralement effectué jusqu'au terme de ce dégagement gazeux. La durée du traitement thermique est variable. Elle dépend généralement de la température à laquelle il est effectué et des concentrations respectives des composés mis en oeuvre. Elle est le plus souvent de 5 minutes à 7 heures et de préférence de 20 minutes à 5 heures et plus particulièrement de 30 minutes à 2 heures.

La réaction entre le composé organoaluminique non halogéné et le composé aminé s'opère de préférence en phase liquide. On peut par exemple introduire le composé aminé dans le composé organoaluminique non halogéné qui est généralement liquide à température ambiante ou dans une solution de ce dernier dans un diluant hydrocarboné inerte généralement choisi parmi les hydrocarbures aliphatiques, cycloaliphatiques et aromatiques liquides tels que par exemple les alcanes et isoalcanes liquides, le benzène et ses dérivés. Les diluants utilisés plus particulièrement à cet effet sont choisis parmi les hydrocarbures qui dissolvent à la fois le composé aminé et le trialkylaluminium. Des composés donnant de bons résultats sont les diluants aromatiques liquides éventuellement mélangés avec des hydrocarbures aliphatiques ou cycloaliphatiques liquides. On obtient de bons résultats en utilisant du toluène. Une manière préférée et particulièrement simple de préparer les cocatalyseurs selon la présente invention consiste à mélanger le trialkylaluminium et le composé aminé qui ont été préalablement dilués dans un diluant inerte tel que décrit ci-avant.

Il va de soi que les cocatalyseurs contenant un ou plusieurs composés organoaluminiques non halogénés et un ou plusieurs aminoalanes rentrent également dans le cadre de la présente invention.

Les cocatalyseurs non halogénés ainsi définis constituent également un objet particulier de la présente invention.

Les systèmes catalytiques selon la présente invention contiennent également un solide catalytique à base de TiCl₃ (a). Les solides catalytiques utilisables préférentiellement selon la présente invention sont les solides à base de TiCl₃ de forme cristalline δ telle que définie par exemple dans Journal of Polymer Science 51, pages 399-410 (1961), complexé par un composé électrodonneur. A titre d'exemples particuliers de composé électrodonneur, on peut citer les éthers, les esters et les alcools. Les éthers aliphatiques sont généralement préférés et plus particulièrement ceux dont les radicaux comprennent de 2 à 8 atomes de carbone. De tels solides sont préférentiellement obtenus par des procédés impliquant une réduction d'un composé de titane par un réducteur organométallique, de préférence organoaluminique.

A titre d'exemples préférés de solides catalytiques (a), on peut citer les solides catalytiques obtenus par traitements successifs ou combinés du solide issu de la réduction de tétrachlorure ou de tétraalkoxyde de titane par un réducteur organoaluminique par un composé électrodonneur tel que défini ci-avant et par un composé halogéné tels que décrits par exemple dans les brevets US-A-4210738 (SOLVAY) et US-A-4295991.

On peut également citer les solides obtenus par traitement thermique, en présence d'un composé halogéné, du matériau liquide résultant de la mise en contact de TiCl₄, prétraité par un composé électrodonneur tel que défini ci-avant avec une composition correspondant à la formule générale :

Al R¹ ₚ Z_{q} X_{3-(p + q)}

dans laquelle
- R¹ représente un radical hydrocarboné contenant de 1 à 18 atomes de carbone et de préférence de 1 à 12 atomes de carbone choisi parmi les radicaux alkyle, aryle, arylalkyle, alkylaryle et cycloalkyle;
- Z représente un groupement choisi parmi -OR², -SR² et -NR²R³ dans lesquels R² et R³ représentent chacun indépendamment les uns des autres un radical hydrocarboné ou un atome d'hydrogène;
- X représente un atome d'halogène;
- p est un nombre quelconque tel que O < p < 3;
- q est un nombre quelconque tel que O < q < 3;
la somme (p + q) étant telle que 0 < (p + q) ≤3 ;
tels que décrits dans le brevet US-A-5206198.

Conviennent également les solides tels que décrits ci-avant qui ont en outre subi des traitements de prépolymérisation et/ou d'activation.

Par traitement de prépolymérisation, on entend généralement les traitements consistant à mettre le solide catalytique, à un moment quelconque de sa préparation, en contact avec une alpha-oléfine telle que par exemple le propylène ou l'éthylène, dans des conditions polymérisantes de manière à obtenir un solide contenant en général de environ 5 à environ 500 % en poids d'alphaoléfine "prépolymérisée" par rapport au poids de trichlorure de titane. De tels traitements sont par exemple décrits dans les brevets US-A-4210729 (SOLVAY) et US-A-4295991 et dans la demande de brevet EP-A-261727 (SOLVAY).

Par traitement d'activation des solides catalytiques, on entend généralement les traitements consistant à mettre le solide catalytique, de préférence séparé du milieu dans lequel il a été préparé et éventuellement lavé par un diluant hydrocarboné inerte tel que décrit ci-avant en contact avec un agent d'activation choisi parmi les composés organoaluminiques et les produits de la réaction d'un composé organoaluminique avec un composé choisi parmi les composés hydroxyaromatiques dont le groupe hydroxyle est stériquement bloqué.

Des détails en rapport avec ces traitements d'activation peuvent être obtenus dans le brevet US-A-4210729 (SOLVAY) et dans la demande de brevet EP-A-261727 (SOLVAY).

Des solides catalytiques (a) convenant également bien sont les solides catalytiques à base de TiCl₃ complexé par un composé électrodonneur déposés dans, ou sur, des supports organiques ou inorganiques. Ces supports peuvent par exemple être choisis parmi les polymères préformés tels que les polymères et copolymères du styrène, les polymères et copolymères du chlorure de vinyle, les polymères et copolymères des esters de l'acide acrylique et les polymères ou copolymères d'oléfines. Ils peuvent également être choisis parmi les supports inorganiques tels que les oxydes de silicium, d'aluminium, de magnésium, de titane, de zirconium et leurs mélanges.

Les solides catalytiques (a) préférés sont ceux obtenus dans les procédés comprenant des traitements successifs ou combinés du solide issu de la réduction de tétrachlorure de titane par un réducteur organoaluminique par un composé électrodonneur et par un composé halogéné. Les composés préparés à partir de solides catalytiques à base de TiCl₃ déposés dans ou sur les supports décrits précédemment conviennent également bien.

Des solides catalytiques (a) permettant également l'obtention de résultats particulièrement bons sont ceux qui ont subi le traitement d'activation par mise en contact avec un composé organoaluminique ou avec le produit de la réaction entre un composé organoaluminique et un composé hydroxyaromatique dont le groupe hydroxyle est stériquement bloqué.

Le composé organoaluminique utilisable pour l'obtention de ces solides catalytiques particuliers est choisi de préférence parmi les trialkylaluminiums et les chlorures d'alkylaluminium. Parmi ces composés, les meilleurs résultats ont été obtenus avec le triéthylaluminium et le chlorure de diéthylaluminium.

Le composé hydroxyaromatique dont le groupe hydroxyle est stériquement bloqué est choisi de préférence parmi les phénols di-tert-alkylés dans les positions ortho par rapport au groupe hydroxyle et les esters de l'acide 3-(3',5'-ditert-butyl-4'-hydroxyphényl)propionique. Parmi ces composés, les meilleurs résultats ont été obtenus avec le 2,6-di-tertbutyl-4-méthyl-phénol et le 3-(3',5'-ditert-butyl-4'hydroxyphényl)propionate de n-octadécyle.

Pour l'obtention des systèmes catalytiques selon la présente invention le solide catalytique (a) et le cocatalyseur non halogéné (b) sont généralement mis en oeuvre dans des proportions telles que le rapport atomique entre l'aluminium du cocatalyseur et le titane du solide catalytique est de 1 à 50. Un tel rapport est généralement supérieur ou égal à 2 et plus particulièrement supérieur ou égal à 5. Ce rapport est en outre le plus souvent inférieur ou égal à 30, de préférence inférieur ou égal à 25. On obtient de bons résultats lorsque le rapport aluminium sur titane est de 2 à 20.

Les systèmes catalytiques préférés selon la présente invention lorsque l'on souhaite des polymères plus stéréoréguliers contiennent en outre un terconstituant choisi parmi les composés oxygénés organiques du silicium et leurs mélanges.

Selon la présente invention, on entend désigner par composés oxygénés organiques du silicium, les composés du silicium dont la molécule comprend au moins un groupement hydrocarbyloxy.

Ces composés sont le plus souvent choisis parmi les composés représentés par la formule générale :

R⁴ ₙ Si (OR⁵)₄₋ₙ

dans laquelle
- R⁴ représente un atome d'hydrogène ou un radical hydrocarboné contenant de 1 à 20 atomes de carbone, choisi par exemple parmi les radicaux alkyle, cycloalkyle, alkényle, aryle, alkylaryle et arylalkyle, pouvant eux-mêmes porter des substituants tels que des groupements amino. De préférence R⁴ est choisi parmi les radicaux alkyle, aryle et cycloalkyle contenant de préférence de 1 à 18 atomes de carbone;
- R⁵ représente un radical hydrocarboné contenant de 1 à 12 atomes de carbone, identique ou différent de R⁴, choisi par exemple parmi les radicaux alkyle, cycloalkyle, alkényle, aryle, alkylaryle et arylalkyle, pouvant eux-mêmes être substitués par des groupements tels que des groupements alkoxy. De préférence, R⁵ est choisi parmi les radicaux alkyle et aryle contenant de 1 à 8 atomes de carbone;
- n est un nombre entier tel que 0 ≤ n ≤ 3.

Dans ces composés, les radicaux R⁴ et R⁵ peuvent chacun indépendamment les uns des autres représenter des radicaux organiques identiques ou différents. Par ailleurs, les systèmes catalytiques selon l'invention peuvent contenir un ou plusieurs composés du silicium.

A titre d'exemples de composés organiques du silicium utilisables dans les systèmes catalytiques selon l'invention, on peut citer les tétra-, tri- et di-méthoxysilanes et les tétra-, tri- et di-éthoxysilanes éventuellement substitués par des radicaux alkyle, cycloalkyle ou aryle, identiques ou différents, choisis par exemple parmi les radicaux méthyle, éthyle, n-propyle, isopropyle, n-butyle, butyle secondaire, isobutyle, tertiobutyle, n-amyle, isoamyle, cyclopentyle, n-hexyle, cyclohexyle, phényle.

Les composés du silicium utilisés préférentiellement contiennent un ou deux substituants (OR⁵) dans lesquels les radicaux R⁵, identiques ou différents, sont choisis parmi les radicaux hydrocarbonés contenant de 1 à 3 atomes de carbone et au moins un substituant R⁴ choisi parmi les radicaux alkyle et cycloalkyle contenant au moins un atome de carbone secondaire ou tertiaire. Les composés du silicium ayant donné les meilleurs résultats sont les diméthoxy- et diéthoxysilanes substitués par au moins un radical alkyle ou cycloalkyle contenant, en position α, β ou γ, un atome de carbone secondaire ou tertiaire.

A titre d'exemples de tels composés, on peut citer le diisobutyldiméthoxysilane, le ditertiobutyldiméthoxysilane, le diisopropyldiméthoxysilane, le dicyclohexyldiméthoxysilane, le cyclohexylméthyldiméthoxysilane, le dicyclopentyldiméthoxysilane, l'isobutylméthyldiméthoxysilane.

Le composé du silicium est généralement mis en oeuvre dans des quantités telles que le rapport atomique entre l'aluminium du cocatalyseur et le silicium qu'il contient est de 0,5 à 50. De préférence ce rapport est supérieur ou égal à 1. On obtient généralement de bons résultats lorsque ce rapport est inférieur ou égal à 20 et plus particulièrement inférieur ou égal à 10.

Les systèmes catalytiques ainsi définis s'appliquent à la polymérisation des oléfines à insaturation terminale telles que les alpha-oléfines dont la molécule contient de 2 à 18 et de préférence de 2 à 6 atomes de carbone et en particulier l'éthylène, le propylène, le 1-butène, le 1-pentène, les 1-méthylbutènes, l'hexène, les 3- et 4-méthyl-1-pentènes.

Par conséquent, la présente invention concerne également un procédé pour la polymérisation des alphaoléfines en présence des systèmes catalytiques décrits ci-dessus. Selon la présente invention on entend par polymérisation des alphaoléfines l'homo et/ou la copolymérisation d'un ou plusieurs des monomères cités ci-avant. Un procédé de polymérisation particulièrement intéressant concerne la polymérisation stéréospécifique du propylène, du 1-butène et du 4-méthyl-1-pentène en polymères cristallins. Les systèmes catalytiques selon la présente invention s'appliquent également à la copolymérisation de ces alpha-oléfines avec au moins un comonomère non identique choisi parmi les alpha-oléfines telles que décrites ci-dessus et les dioléfines comprenant de 4 à 18 atomes de carbone. De préférence, les dioléfines sont des dioléfines aliphatiques non conjuguées telles que l'hexadiène-1,4, le 7-méthyl-1,6-octadiène, et le 1,9-décadiène, des dioléfines monocycliques non conjuguées telles que le 4-vinylcyclohexène, des dioléfines alicycliques ayant un pont endocyclique telles que le dicyclopentadiène, le méthylène- et l'éthylydènenorbornène et des dioléfines aliphatiques conjuguées telles que le butadiène ou l'isoprène.

Ils s'appliquent encore à la fabrication de copolymères appelés à blocs qui sont constitués au départ d'alpha-oléfines et/ou de dioléfines. Ces copolymères à blocs consistent en des blocs distincts de composition variable; chaque bloc consiste en un homopolymère d'une alpha-oléfine ou en un copolymère statistique comprenant une alpha-oléfine et au moins un comonomère choisi parmi les alpha-oléfines et les dioléfines. Les alpha-oléfines et les dioléfines sont choisies parmi celles mentionnées ci-dessus.

Les systèmes catalytiques selon l'invention conviennent particulièrement bien pour la fabrication d'homopolymères du propylène. Ils conviennent également bien à la fabrication de copolymères de ce dernier contenant au total au moins 50 % en poids de propylène et de préférence au moins 60 % en poids de propylène.

Dans ce cas, généralement, la température de polymérisation varie de 20 à 200 °C et de préférence de 50 à 100 °C, les meilleurs résultats étant obtenus de 65 à 95 °C. La pression est choisie généralement entre la pression atmosphérique et 60 atmosphères et de préférence de 10 à 50 atmosphères. Cette pression peut être fonction de la température à laquelle s'effectue la polymérisation.

La polymérisation peut être effectuée en continu ou en discontinu.

La polymérisation peut être effectuée selon n'importe quel procédé connu : en solution ou en suspension dans un diluant hydrocarboné inerte, tel que ceux définis ci-avant. Dans ce cas particulier, le diluant utilisé préférentiellement est choisi parmi le butane, l'isobutane, l'hexane, l'heptane, le cyclohexane, le méthylcyclohexane ou leurs mélanges. On peut également opérer la polymérisation dans le monomère ou dans un des monomères maintenu à l'état liquide ou encore en phase gazeuse.

La quantité des différents composés des systèmes catalytiques selon l'invention mise en oeuvre pour cette polymérisation n'est pas critique pour autant que les rapports entre le solide catalytique, le cocatalyseur et éventuellement le composé du silicium décrits ci-avant soient respectés. On opère généralement de manière à ce que la quantité totale de cocatalyseur soit supérieure à 0,1 mmole par litre de diluant, de monomère liquide ou de volume de réacteur et de préférence supérieure ou égale à 0,5 mmole par litre.

Le solide catalytique (a), le cocatalyseur (b) et éventuellement le composé du silicium sont généralement ajoutés séparément au milieu de polymérisation. L'ordre d'introduction de ces composés n'est pas critique. Il peut cependant s'avérer avantageux d'introduire le solide catalytique en dernier lieu.

On peut également effectuer un précontact entre le cocatalyseur (b) et le composé du silicium ou entre le solide catalytique (a) et l'un ou l'autre de ces composés ou encore entre ces trois composés avant de les mettre en oeuvre pour la polymérisation.

Un tel précontact est généralement effectué à une température variable de -40 à +80 °C pendant une durée qui est dépendante de cette température et qui peut aller de quelques secondes à plusieurs heures voire plusieurs jours.

Toutefois, lorsque le précontact fait intervenir le solide catalytique (a), on préfère limiter la durée du précontact à quelques secondes voire quelques minutes. On remarque également qu'un précontact à température élevée et pendant des durées relativement longues du trialkylaluminium et du composé du silicium est défavorable.

Dans le cas où le cocatalyseur (b) contient le composé organoaluminique et l'aminoalane obtenu préalablement, ces deux composés peuvent être introduits de n'importe quelle manière dans le réacteur de polymérisation. De préférence on effectue un précontact entre l'aminoalane et au moins une fraction du composé organoaluminique avant de les introduire dans le milieu de polymérisation comme décrit ci-avant.

La masse moléculaire moyenne des polymères fabriqués selon le procédé de l'invention peut être réglée par addition au milieu de polymérisation d'un ou plusieurs agents de réglage de la masse moléculaire moyenne comme l'hydrogène, le diéthylzinc, les alcools, les éthers et les halogénures d'alkyle. L'hydrogène convient bien.

Les systèmes catalytiques selon l'invention peuvent avantageusement être utilisés pour la production, avec des rendements particulièrement élevés, de polymères du propylène présentant une large gamme de stéréospécificité.

L'utilisation des systèmes catalytiques selon l'invention permet en outre l'obtention, avec de bons rendements, de polymères contenant une quantité de chlore plus faible que celle mesurée sur les polymères issus de systèmes catalytiques à base de trichlorure de titane traditionnels. De ce fait, les polymères obtenus sont plus stables et leur mise en oeuvre n'entraîne pas de phénomènes de corrosion des dispositifs utilisés à cette fin. En outre, la stabilisation de ces polymères nécessite de moins grandes quantités d'additifs ce qui constitue non seulement un avantage économique mais permet également d'utiliser lesdits polymères dans les applications où une grande pureté est requise.

Les systèmes catalytiques selon l'invention permettent aussi, lorsqu'ils sont utilisés dans des procédés de polymérisation en phase gazeuse, d'éviter la formation en tout ou en partie, dans le réacteur de polymérisation ou dans le dispositif de circulation des monomères gazeux, des polymères de faible masse moléculaire se présentant sous forme d'huiles visqueuses ou semi-solides susceptibles de perturber le bon fonctionnement du réacteur de polymérisation. Une telle utilisation des systèmes catalytiques selon l'invention est dès lors particulièrement favorable.

On remarque par ailleurs que les systèmes catalytiques selon la présente invention sont particulièrement actifs et présentent une stéréospécificité élevée même lorsque le rapport molaire entre l'aluminium du cocatalyseur et le titane du solide catalytique est relativement élevé. On constate également que les systèmes catalytiques selon la présente invention présentent l'avantage de pouvoir être mis en oeuvre dans une large gamme de rapports molaires aluminium du cocatalyseur/titane du solide catalytique sans que les propriétés des polymères obtenus soient affectées. De tels comportements permettent d'augmenter la reproductibilité des résultats de polymérisation et sont en conséquence particulièrement favorables pour les applications industrielles.

Un autre avantage des systèmes catalytiques selon l'invention est que la quantité de composé du silicium nécessaire à l'obtention d'une stéréorégularité élevée est particulièrement faible par rapport aux systèmes ne contenant pas d'aminoalane.

Les exemples suivants servent à illustrer l'invention.

La signification des symboles utilisés dans ces exemples, les unités exprimant les grandeurs mentionnées et les méthodes de mesure de ces grandeurs sont explicitées ci-dessous.
- act. =: activité catalytique exprimée conventionnellement en grammes de polymère obtenus par heure et par gramme de TiCl₃ contenu dans le solide catalytique. Cette activité est appréciée indirectement à partir de la détermination de la teneur résiduelle en titane dans le polymère par fluorescence X.
- PSA =: poids spécifique apparent du polymère insoluble exprimé en g/dm³.
- MFI =: indice de fluidité en fondu mesuré sous une charge de 2,16 kg à 230 °C et exprimé en g/10 min (norme ASTM D 1238) (1986).
- Sol. =: indice d'isotacticité du polymère, apprécié par la fraction de ce dernier, exprimée en % en poids par rapport à la quantité totale de polymère recueilli, qui est soluble dans l'hexane de polymérisation.

### Exemples 1 à 3

### A - Préparation du solide catalytique

Dans un réacteur de 800 ml équipé d'un agitateur à 2 pales tournant à 400 tours/min, on introduit sous atmosphère d'azote 90 ml d'hexane sec et 60 ml de TiCl₄ pur. Cette solution hexane-TiCl₄ est refroidie à 0 (± 1) °C. Endéans 4 h on y additionne une solution constituée de 190 ml d'hexane et de 70 ml de chlorure de diéthylaluminium (DEAC) en maintenant la température de 0 (± 1) °C dans le réacteur.

Après addition de la solution de DEAC-hexane, le milieu de réaction constitué par une suspension de fines particules est maintenu sous agitation à 0 (± 1) °C pendant 15 min, puis est porté en 1 h à 25 °C et maintenu 1 h à cette température et ensuite porté en 1 h environ à 65 °C. Le milieu est maintenu sous agitation pendant 2 h à 65 °C puis on le refroidit à environ 55 °C et on introduit, dans le ciel gazeux du réacteur, du propylène sous une pression de 2 bars.

Cette introduction est poursuivie pendant un temps suffisant (environ 45 min) pour obtenir, par kg de solide final, 65 g de propylène polymérisé. La suspension du solide ainsi prépolymérisé est ensuite refroidie à 40 °C et lavée avec de l'hexane sec.

Le solide réduit ainsi obtenu est mis en suspension dans 456 ml de diluant (hexane) et on y ajoute 86 ml d'éther diisoamylique (EDIA).

La suspension est agitée à 250 tr/min pendant 1 h à 50 °C puis décantée. Après avoir éliminé le surnageant, on remet le solide en suspension dans 210 ml d'hexane et on y ajoute 52 ml de TiCl₄. La suspension est ensuite maintenue sous agitation (150 tr/min) à 75 °C pendant 2 h. La phase liquide est ensuite éliminée par filtration et le solide à base de trichlorure de titane complexé est lavé par de l'hexane sec. Le solide à base de TiCl₃ complexé ainsi obtenu est alors remis en suspension dans de l'hexane (à raison de 4 ml d'hexane par gramme de solide) et mis en contact avec 120 ml d'une solution contenant, par litre d'hexane, 80 g de DEAC et 176,2 g de 3-(3',5'-di-tert-butyl-4'-hydroxyphényl)propionate de n-octadécyle.

La suspension ainsi additionnée est maintenue pendant 1 heure à 30 °C sous agitation.

Après décantation, le solide catalytique activé résultant est lavé par de l'hexane sec, avec remise en suspension du solide.

Le solide catalytique activé ainsi obtenu contient, par kg, 720 g de TiCl₃, et 40 g d'EDIA.

### B - Préparation du cocatalyseur

Dans un réacteur de verre maintenu sous azote et à température ambiante, on introduit successivement et sous agitation :
- 50 ml de toluène;
- 5 ml de triéthylaluminium (TEAL) (36,5 mmoles); et
- 13,8 ml d'éthylène diamine en solution 0,88 molaire dans le toluène (12,1 mmoles).

Le mélange est ensuite porté à reflux du toluène (110 °C) pendant 1 heure avant d'être refroidi et utilisé en polymérisation. Le produit obtenu (mélange TEAL/aminoalane) ne donne pas lieu à un dégagement d'éthane lorsqu'il est soumis à un traitement thermique à 100 °C pendant une heure.

### C - Polymérisation du propylène en suspension dans de l'hexane

Dans un autoclave de 5 l, préalablement séché, on introduit sous balayage d'azote sec :
- 500 ml d'hexane
- 4,9 ml de la solution contenant le cocatalyseur telle que préparée au point B.
- 3,4 ml de diisobutyldiméthoxysilane (sous forme d'une solution dans l'hexane à 0,384 mole/l)
- une quantité de solide catalytique telle que le rapport molaire entre l'aluminium du cocatalyseur et le titane de ce solide soit égal à celui renseigné dans le Tableau I ci-après.

L'agitation est ensuite mise en marche, l'autoclave raccordé à un barbotteur à huile et finalement chauffé à la température de polymérisation. Dès que 63 °C est atteint, l'autoclave est isolé et une pression de 1 bar en H₂ est introduite. Le propylène est ensuite admis et la pression de travail (24 bars absolus) est maintenue durant la durée de l'essai (3 heures), à la température de travail (70 °C).

La réaction de polymérisation est alors arrêtée par addition d'un mélange d'eau (250 ml) et de soude (25 mmoles). Le polymère solide est isolé par filtration et le polymère soluble dans l'hexane de polymérisation est recueilli par évaporation du solvant. Les caractéristiques de ces essais sont reprises dans le Tableau I ci-après.

**Tableau I**

| Exemples | 1 | 2 | 3 |
|---|---|---|---|
| Quantité de cocatalyseur (ml) | 4,9 | 4,9 | 4,9 |
| Rapport molaire Al/Ti | 13,3 | 9,1 | 6,6 |
| Rapport molaire Al/Si | 2 | 2 | 2 |

| Résultats en polymérisation | | | |
|---|---|---|---|
| act. | 2875 | 2797 | 2587 |
| PSA | 453 | 444 | 473 |
| Sol. | 2 | 2 | 2 |
| MFI | 5,7 | 6,8 | 7,7 |
| Cl dans le polymère (ppm) | 80 | 82 | 89 |

On remarque que l'activité des systèmes catalytiques selon l'invention augmente légèrement avec le rapport Al/Ti, les autres paramètres restant sensiblement identiques.

### Exemple comparatif 4R

L'exemple 4R illustre la polymérisation du propylène dans des conditions identiques à celles de l'exemple 1 mais au moyen d'un système catalytique contenant à titre de cocatalyseur 5 mmole de TEAL 72 mg de solide catalytique. Le rapport molaire entre l'aluminium du TEAL et le titane du solide catalytique est de 14,9.

Cet essai permet de recueillir avec une activité de 2156 et un indice d'isotacticité Sol. de 19,2 un polymère collant difficilement manipulable. Le MFI de ce polymère est de 18,2.

### Exemple comparatif 5R

On polymérise du propylène dans les conditions de l'exemple 1 partie C au moyen d'un système catalytique contenant :
- 119 mg de solide catalytique tel que décrit à l'exemple 1 partie A;
- 5,4 ml d'une solution obtenue par mise en contact de 10 ml de TEAL (73,6 mmoles), 41,8 ml d'une solution 0,88 molaire d'éthylène diamine dans le toluène et 100 ml de toluène n'ayant pas subi de traitement thermique. Cette solution contient donc de l'hydrogène actif au sens de la présente invention.

Cet essai permet de recueillir avec une activité de 147 et un Sol. de 8,8 un polymère présentant un PSA de 377.

Cet exemple comparatif met en évidence l'importance de l'absence d'hydrogène actif dans les cocatalyseurs selon l'invention.

### Exemples 6, 7 et 8

Les exemples 6 et 7 illustrent les cocatalyseurs obtenus par mise en contact de trialkylaluminium avec une monoamine primaire et secondaire.

L'exemple 6 est effectué en utilisant un cocatalyseur obtenu par mise en contact à température ambiante dans un rapport atomique aluminium/azote de 2, 10 ml de TEAL et de 3 ml de n-propylamine dans 125 ml de toluène et traitement thermique de ce mélange au reflux du toluène pendant 1 h. A la fin de ce traitement thermique, le dégagement d'éthane a complètement disparu.

L'exemple 7 est effectué en utilisant un cocatalyseur obtenu par mise en contact dans un rapport atomique aluminium/azote de 2, 10 ml de TEAL et 5 ml de di-n-propylamine dans 140 ml de toluène. Cette solution n'est utilisée qu'au terme du dégagement gazeux accompagnant la réaction de l'amine sur le TEAL. Dans ces conditions on obtient un mélange qui ne contient plus d'hydrogène actif au sens de la présente invention.

Les résultats des essais de polymérisation ainsi que les conditions dans lesquelles ils ont été effectués sont repris dans le tableau II ci-après.

**Tableau II**

| Exemples | 6 | 7 | 8 |
|---|---|---|---|
| Quantité de cocatalyseur (ml) | | | |
| Rapport molaire Al/Ti | 11,5 | 8,1 | 9,6 |
| Rapport molaire Al/Si | 2 | 2 | 5 |

| Résultats en polymérisation | | | |
|---|---|---|---|
| act. | 3981 | 3981 | 4704 |
| PSA | 475 | 462 | 457 |
| Sol. | 1,4 | 1,0 | 1,7 |
| MFI | 3,1 | 1,9 | 2,9 |
| Cl dans le polymère (ppm) | 58 | 58 | 49 |

## Revendications

1. Système catalytique utilisable pour la polymérisation des alpha-oléfines comprenant :
(a) un solide catalytique à base de trichlorure de titane (TiCl₃),
(b) un cocatalyseur non halogéné comprenant au moins un composé organoaluminique non halogéné,
caractérisé en ce que le cocatalyseur non halogéné contient en outre au moins un aminoalane ne contenant pas d'hydrogène actif choisi parmi les composés organoaluminiques contenant au moins une liaison aluminium/azote qui ne dégagent pas d'éthane lorsqu'ils sont mis en présence de triéthylaluminium à une température comprise entre 80 et 120 °C.

2. Système catalytique selon la revendication 1, caractérisé en ce que le composé organoaluminique non halogéné est choisi parmi les trialkyl-aluminiums possédant des radicaux alkyle identiques ou différents contenant de 1 à 12 atomes de carbone.

3. Système catalytique selon la revendication 1 ou 2, caractérisé en ce que l'aminoalane est choisi parmi les composés représentés par la formule générale :
(AlR₂)₃₋ₓ N R'ₓ (I)
dans laquelle
- R représente un radical hydrocarboné pouvant contenir un ou plusieurs hétéroatomes;
- R' représente un atome d'hydrogène ou un radical hydrocarboné pouvant contenir un ou plusieurs hétéroatomes;
- x est un nombre quelconque tel que 0 ≤ x < 3;
les radicaux R' et R pouvant chacun indépendamment les uns des autres représenter des radicaux identiques ou différents.

4. Système catalytique selon l'une quelconque des revendications 1 à 3, caractérisé en ce que le cocatalyseur contient le composé organoaluminique non halogéné et l'aminoalane dans des quantités telles que leur rapport molaire soit de 0,05 à 10.

5. Système catalytique selon l'une quelconque des revendications 1 à 4, caractérisé en ce que le cocatalyseur est obtenu par réaction d'un composé aminé contenant au moins un lien azote/hydrogène avec un trialkylaluminium dans un rapport molaire entre l'aluminium du trialkylaluminium et l'azote du composé aminé supérieur à 1.

6. Système catalytique selon l'une quelconque des revendications 1 à 5, caractérisé en ce que le solide catalytique à base de TiCl₃ est un solide de forme cristalline δ complexé par un composé électrodonneur.

7. Système catalytique selon la revendication 6, caractérisé en ce que le solide catalytique est obtenu par un procédé impliquant une réduction d'un composé de titane par un réducteur organométallique.

8. Système catalytique selon la revendication 7, caractérisé en ce que le solide catalytique a subi un traitement d'activation par mise en contact avec un composé organoaluminique ou avec le produit de la réaction entre un composé organoaluminique et un composé hydroxyaromatique dont le groupe hydroxyle est stériquement bloqué.

9. Système catalytique selon l'une quelconque des revendications 1 à 8, caractérisé en ce qu'il contient en outre un terconstituant choisi parmi les composés oxygénés organiques du silicium et leurs mélanges.

10. Système catalytique selon la revendication 9, caractérisé en ce que le composé oxygéné organique du silicium est choisi parmi les composés répondant à la formule :
R⁴ ₙ Si (OR⁵)₄₋ₙ
dans laquelle
- R⁴ représente un atome d'hydrogène ou un radical hydrocarboné contenant de 1 à 20 atomes de carbone, choisi par exemple parmi les radicaux alkyle, cycloalkyle, alkényle, aryle, alkylaryle et arylalkyle, pouvant eux-mêmes porter des substituants tels que des groupements amino;
- R⁵ représente un radical hydrocarboné contenant de 1 à 12 atomes de carbone, identique ou différent de R⁴, choisi par exemple parmi les radicaux alkyle, cycloalkyle, alkényle, aryle, alkylaryle et arylalkyle, pouvant eux-mêmes être substitués par des groupements tels que des groupements alkoxy;
- n est un nombre entier tel que 0 ≤ n ≤ 3.

11. Système catalytique selon l'une quelconque des revendications 9 à 10, caractérisé en ce que le rapport atomique entre l'aluminium du cocatalyseur non halogéné et le silicium du composé oxygéné organique du silicium est de 0,5 à 50.

12. Cocatalyseur non halogéné utilisable pour la polymérisation des alpha-oléfines comprenant au moins un composé organoaluminique et au moins un aminoalane ne contenant pas d'hydrogène actif choisi parmi les composés organoaluminiques contenant au moins une liaison aluminium/azote et qui ne dégagent pas d'éthane lorsqu'ils sont mis en présence de triéthylaluminium à une température comprise entre 80 et 120 °C.

13. Procédé pour la polymérisation des alphaoléfines effectuée en présence d'un système catalytique conforme à l'une quelconque des revendications 1 à 11.

14. Procédé selon la revendication 13, caractérisé en ce que le système catalytique mis en oeuvre contient en outre un terconstituant choisi parmi les composés oxygénés organiques du silicium.

15. Procédé selon l'une quelconque des revendications 13 à 14 appliqué à la fabrication d'homopolymères du propylène.

16. Procédé selon l'une quelconque des revendications 13 à 14 appliqué à la fabrication de copolymères du propylène contenant au moins 50 % en poids de propylène.

## Claims

1. Catalytic system which may be used for the polymerization of alpha-olefins, comprising:
(a) a solid catalyst based on titanium trichloride (TiCl₃),
(b) a non-halogen-containing cocatalyst comprising at least one non-halogen-containing organoaluminium compound,
characterized in that the non-halogen-containing cocatalyst additionally contains at least one aminoalane containing no active hydrogen chosen from the organoaluminium compounds containing at least one aluminium/nitrogen bond which do not release ethane when they are placed in the presence of triethylaluminium at a temperature of between 80 and 120°C.

2. Catalytic system according to Claim 1, characterized in that the non-halogen-containing organoaluminium compound is chosen from the trialkylaluminiums possessing identical or different alkyl radicals containing from 1 to 12 carbon atoms.

3. Catalytic system according to Claim 1 or 2, characterized in that the aminoalane is chosen from the compounds represented by the general formula:
(AlR₂)₃₋ₓNR'ₓ (I)
in which
- R represents a hydrocarbon radical which may contain one or more hetero atoms;
- R' represents a hydrogen atom or a hydrocarbon radical which may contain one or more hetero atoms;
- x is any number such that 0 ≤ x < 3;
it being possible for the radicals R' and R, independently of each other, to represent identical or different radicals.

4. Catalytic system according to any one of Claims 1 to 3, characterized in that the cocatalyst contains the non-halogen-containing organoaluminium compound and the aminoalane in quantities such that their molar ratio is from 0.05 to 10.

5. Catalytic system according to any one of Claims 1 to 4, characterized in that the cocatalyst is obtained by reaction of an amino compound containing at least one nitrogen/hydrogen bond with a trialkylaluminium in a molar ratio between the aluminium of the trialkylaluminium and the nitrogen of the amino compound of greater than 1.

6. Catalytic system according to any one of Claims 1 to 5, characterized in that the solid catalyst based on TiCl₃ is a solid of crystalline form δ complexed with an electron-donating compound.

7. Catalytic system according to Claim 6, characterized in that the solid catalyst is obtained by a process involving a reduction of a titanium compound by an organometallic reducing agent.

8. Catalytic system according to Claim 7, characterized in that the solid catalyst has undergone an activation treatment by being placed in contact with an organoaluminium compound or with the product of the reaction between an organoaluminium compound and a hydroxyaromatic compound in which the hydroxyl group is sterically hindered.

9. Catalytic system according to any one of Claims 1 to 8, characterized in that it additionally contains a tertiary constituent chosen from oxygenated organosilicon compounds and their mixtures.

10. Catalytic system according to Claim 9, characterized in that the oxygenated organosilicon compound is chosen from the compounds corresponding to the formula:
R⁴ ₙSi(OR⁵)₄₋ₙ
in which
- R⁴ represents a hydrogen atom or a hydrocarbon radical containing from 1 to 20 carbon atoms chosen, for example, from alkyl, cycloalkyl, alkenyl, aryl, alkylaryl and arylalkyl radicals, which may themselves bear substituents such as amino groups;
- R⁵ represents a hydrocarbon radical containing from 1 to 12 carbon atoms, which may be identical to or different from R⁴, chosen for example from alkyl, cycloalkyl, alkenyl, aryl, alkylaryl and arylalkyl radicals, which may themselves be substituted with groups such as alkoxy groups;
- n is an integer such that 0 ≤ n ≤ 3.

11. Catalytic system according to either of Claims 9 and 10, characterized in that the atomic ratio between the aluminium of the non-halogen-containing cocatalyst and the silicon of the oxygenated organosilicon compound is from 0.5 to 50.

12. Non-halogen-containing cocatalyst which may be used for the polymerization of alpha-olefins comprising at least one organoaluminium compound and at least one aminoalane containing no active hydrogen chosen from the organoaluminium compounds containing at least one aluminium/nitrogen bond which does not release ethane when they are placed in the presence of triethylaluminium at a temperature of between 80 and 120°C.

13. Process for the polymerization of alpha-olefins performed in the presence of a catalytic system according ot either of claims 1 to 11.

14. Process according to Claim 13, characterized in that the catalytic system used additionally contains a tertiary constituent chosen from oxygenated organosilicon compounds.

15. Process according to any one of Claims 13 to 14 applied to the manufacture of propylene homopolymers.

16. Process according to any one of Claims 13 to 14 applied to the manufacture of propylene copolymers containing at least 50 % by weight of propylene.

## Patentansprüche

1. Für die Polymerisation von alpha-Olefinen verwendbares katalytisches System, das enthält:
(a) einen katalytischen Feststoffauf der Basis von Titantrichlorid (TiCl₃) und
(b) einen nichthalogenierten Cokatalysator, der mindestens eine nichthalogenierte aluminiumorganische Verbindung enthält,
dadurch gekennzeichnet, daß der nichthalogenierte Cokatalysator außerdem mindestens ein Aminoalan enthält, das keinen aktiven Wasserstoff aufweist und das unter den aluminiumorganischen Verbindungen ausgewählt ist, die mindestens eine Aluminium-Stickstoff-Bindung aufweisen und die kein Ethan freisetzen, wenn sie bei einer Temperatur von 80 bis 120 °C mit Triethylaluminium in Kontakt gebracht werden.

2. Katalytisches System nach Anspruch 1, dadurch gekennzeichnet, daß die nichthalogenierte aluminiumorganische Verbindung ausgewählt ist unter den Aluminiumtrialkylen, die gleiche oder verschiedene Alkylgruppen mit 1 bis 12 Kohlenstoffatomen aufweisen.

3. Katalytisches System nach Anspruch 1 oder 2, dadurch gekennzeichnet, daß das Aminoalan ausgewählt ist unter den Verbindungen, die durch die folgende allgemeine Formel dargestellt werden:
(AlR₂)₃₋ₓ N R'ₓ (I)
in der
- R eine Kohlenwasserstoffgruppe darstellt, die ein oder mehrere Heteroatome enthalten kann;
- R' ein Wasserstoffatom oder eine Kohlenwasserstoffgruppe darstellt, die ein oder mehrere Heteroatome enthalten kann und
- x eine beliebige Zahl ist, mit der Maßgabe, daß 0 ≤ x < 3;
wobei die Gruppen R und R' unabhängig voneinander die gleiche Gruppe oder verschiedene Gruppen darstellen können.

4. Katalytisches System nach einem der Ansprüche 1 bis 3, dadurch gekennzeichnet, daß der Cokatalysator die nichthalogenierte aluminiumorganische Verbindung und das Aminoalan in solchen Mengenanteilen enthält, daß deren Molverhältnis im Bereich von 0,05 bis 10 liegt.

5. Katalytisches System nach einem der Ansprüche 1 bis 4, dadurch gekennzeichnet, daß der Cokatalysator durch Umsetzung einer Aminoverbindung, die mindestens eine Stickstoff-Wasserstoff-Bindung aufweist, mit einem Aluminiumtrialkyl gewonnen wird, wobei das Molverhältnis *Aluminium des Aluminiumtrialkyls/Stickstoff der Aminoverbindung* größer als 1 ist.

6. Katalytisches System nach einem der Ansprüche 1 bis 5, dadurch gekennzeichnet, daß der katalytische Feststoff auf der Basis von TiCl₃ ein mit einer Elektronendonor-Verbindung komplexierter Feststoffin δ-kristalliner Form ist.

7. Katalytisches System nach Anspruch 6, dadurch gekennzeichnet, daß der katalytische Feststoff durch ein Verfahren gewonnen wird, das die Reduktion einer Titanverbindung durch ein metallorganisches Reduktionsmittel einschließt.

8. Katalytisches System nach Anspruch 7, dadurch gekennzeichnet, daß der katalytische Feststoff einer Aktivierungsbehandlung unterzogen wurde, indem er mit einer aluminiumorganischen Verbindung oder mit dem Produkt der Reaktion zwischen einer aluminiumorganischen Verbindung und einer hydroxyaromatischen Verbindung, deren Hydroxylgruppe sterisch gehindert ist, in Kontakt gebracht wurde.

9. Katalytisches System nach einem der Ansprüche 1 bis 8, dadurch gekennzeichnet, daß es außerdem einen dritten Bestandteil enthält, der unter den sauerstoffhaltigen organischen Siliciumverbindungen sowie deren Gemischen ausgewählt ist.

10. Katalytisches System nach Anspruch 9, dadurch gekennzeichnet, daß die sauerstoffhaltige organische Siliciumverbindung ausgewählt ist unter den Verbindungen, die der folgenden Formel entsprechen:
R⁴ ₙ Si (OR⁵)₄₋ₙ
in der
- R⁴ ein Wasserstoffatom oder eine Kohlenwasserstoffgruppe mit 1 bis 20 Kohlenstoffatomen darstellt, die beispielsweise unter den Alkyl-, Cycloalkyl-Alkenyl-, Aryl-, Alkylaryl- und Arylalkylgruppen ausgewählt ist, welche ihrerseits Substituenten wie Aminogruppen tragen können;
- R⁵ eine Kohlenwasserstoffgruppe mit 1 bis 12 Kohlenstoffatomen darstellt, die beispielsweise unter den Alkyl-, Cycloalkyl-, Alkenyl-, Aryl-, Alkylaryl- und Arylalkylgruppen ausgewählt ist, welche ihrerseits Substituenten wie Alkoxygruppen tragen können,
wobei R⁵ die gleiche Gruppe wie R⁴ sein kann oder eine andere,
und
- n eine ganze Zahl ist, mit der Maßgabe, daß 0 ≤ n ≤ 3.

11. Katalytisches System nach Anspruch 9 oder 10, dadurch gekennzeichnet, daß das Molverhältnis *Aluminium des nichthalogenierten Cokatalysators/Silicium der sauerstoffhaltigen organischen Siliciumverbindung* im Bereich von 0,5 bis 50 liegt.

12. Für die Polymerisation von alpha-Olefinen verwendbarer nichthalogenierter Cokatalysator, der mindestens eine aluminiumorganische Verbindung und mindestens ein Aminoalan enthält, das keinen aktiven Wasserstoff aufweist und das unter den aluminiumorganischen Verbindungen ausgewählt ist, die mindestens eine Aluminium-Stickstoff-Bindung aufweisen und die kein Ethan freisetzen, wenn sie bei einer Temperatur von 80 bis 120 °C mit Triethylaluminium in Kontakt gebracht werden.

13. Verfahren zur Polymerisation von alpha-Olefinen, das in Gegenwart eines katalytischen Systems nach einem der Ansprüche 1 bis 11 durchgeführt wird.

14. Verfahren nach Anspruch 13, dadurch gekennzeichnet, daß das eingesetzte katalytische System außerdem einen dritten Bestandteil enthält, der unter den sauerstoffhaltigen organischen Siliciumverbindungen ausgewählt ist.

15. Verfahren nach Anspruch 13 oder 14, das zur Herstellung von Propen-Homopolymeren eingesetzt wird.

16. Verfahren nach Anspruch 13 oder 14, das zur Herstellung von Propen-Copolymeren eingesetzt wird, die mindestens 50 Gew.-% Propen enthalten.
